# FASCICULE DE BREVET EUROPEEN

(11) **EP 3 671 393 B1**
(45) Date de publication et mention de la délivrance du brevet: **09.04.2025**
(21) Numéro de dépôt: 19217725.1
(22) Date de dépôt: 18.12.2019
(51) Int. Cl.: G05D 1/00, B64C 25/40

(54) **DISPOSITIF DE COMMANDE DE LA MOTORISATION D'UN TRAIN D'ATTERRISSAGE**
STEUERVORRICHTUNG DES ANTRIEBS EINES FAHRWERKS
DEVICE FOR CONTROLLING THE DRIVE SYSTEM OF A LANDING GEAR

(30) Priorité: 19.12.2018 FR 1873419
(43) Date de publication de la demande: 24.06.2020
(73) Titulaire: Safran Landing Systems, 78140 Vélizy-Villacoublay (FR)
(72) Inventeur: FRAIM, Julien, 77550 Moissy-Cramayel (FR); BOISSARD, Laurent, 77550 Moissy-Cramayel (FR); TELHADAS, Denis, 77550 Moissy-Cramayel (FR)
(74) Mandataire: Cabinet Boettcher

(56) Documents cités:
- FR-A1- 2 944 775
- US-A1- 2009 261 197
- US-A1- 2016 170 435
- US-A1- 2017 057 624

## Description

La présente invention concerne le domaine de l'aéronautique et plus particulièrement le pilotage des aéronefs au sol.

### Arrière-plan technologique

Il est nécessaire de déplacer au sol les aéronefs entre la piste de décollage/atterrissage et leur place de parking. Certains de ces déplacements suivent une trajectoire rectiligne ou courbe à grand rayon et se font à une vitesse relativement élevée (on parle de « taxiage » ou « taxiing »). D'autres déplacements précèdent l'arrêt de l'aéronef ou suivent une trajectoire courbe à petit rayon et doivent donc se faire à une vitesse réduite (on parle alors de « manœuvre »).

Classiquement, ces déplacements sont réalisés en utilisant :
- soit, pour les déplacements vers l'avant, la motorisation principale de l'aéronef, c'est-à-dire celle utilisée pour les évolutions aériennes, généralement une motorisation thermique ;
- soit, pour les déplacements vers l'arrière, un véhicule terrestre attelé à la jambe de train avant de l'aéronef.

Un tel aéronef présente une consommation globale de carburant relativement importante compte tenu de l'utilisation de la motorisation principale au sol comme en vol.

Pour y remédier, il est connu de pourvoir l'aéronef d'un dispositif entraînement en rotation d'une ou plusieurs roues du dispositif d'atterrissage de l'aéronef de manière à permettre à celui-ci de se déplacer au sol sans recourir à sa motorisation principale.

Pour tendre vers l'avion plus électrique ou tout électrique, le dispositif d'entraînement en rotation utilise un ou plusieurs moteurs électriques qui sont commandés par une unité électronique de commande reliée à une interface de pilotage installée dans le cockpit de l'aéronef.

Or, cet agencement entraîne une rupture des habitudes des pilotes qui rencontrent des difficultés pour se sentir parfaitement à l'aise lors du taxiage.

Il est connu du document US-A-2016/170435 d'avoir une interface de pilotage qui comporte un élément de commande que le pilote de l'aéronef peut déplacer pour émettre des signaux de commande que l'unité électronique de commande est agencée pour transformer en signaux de pilotage du moteur et qui est agencée pour déterminer des vitesses minimale et maximale en marche avant et des vitesses minimale et maximale en marche arrière. D'autres dispositifs similaires de motorisation pour déplacer au sol un aéronef sont connus des documents FR2944775A1, US2017/057624A1 et US2009/261197A1.

### Objet de l'invention

Un but de l'invention est de fournir un moyen pour faciliter le pilotage de l'aéronef au sol.

### Bref exposé de l'invention

A cet effet, on prévoit, selon l'invention un dispositif de motorisation selon la revendication 1.

Les évolutions au sol de l'aéronef comprennent des déplacements selon des trajectoires rectilignes et des déplacements selon des trajectoires courbes. Les déplacements rectilignes doivent pouvoir être réalisés à une vitesse comprise entre une vitesse minimale et une vitesse maximale selon que le pilote souhaite s'arrêter prochainement ou au contraire traverser le plus rapidement possible une piste de décollage/atterrissage. La vitesse maximale des déplacements en courbe est conditionnée par le rayon des trajectoires courbes : plus ce rayon est faible, plus la vitesse maximale possible est faible. L'invention permet un pilotage facile de l'aéronef dans chacune de ces phases.

Les vitesses maximales sont déterminées en fonction de la dynamique de l'aéronef au sol résultant de la hauteur du centre de gravité de l'appareil et de la voie du train d'atterrissage par exemple.

D'autres caractéristiques et avantages de l'invention ressortiront à la lecture de la description qui suit d'un mode de réalisation particulier et non limitatif de l'invention.

### Brève description des dessins

Il sera fait référence aux dessins annexés, parmi lesquels :
- la figure 1 est une vue schématique partielle, en perspective, d'un aéronef selon l'invention ;
- la figure 2 est un schéma par bloc de la commande de l'aéronef selon un premier mode de mise en œuvre de l'invention ;
- la figure 3 est un schéma par bloc de la commande de l'aéronef selon un deuxième mode de mise en œuvre de l'invention ;
- la figure 4 est une vue schématique de l'interface de pilotage selon un premier mode de réalisation ;
- la figure 5 est une vue schématique de l'interface de pilotage selon un deuxième mode de réalisation.

### Description détaillée de l'invention

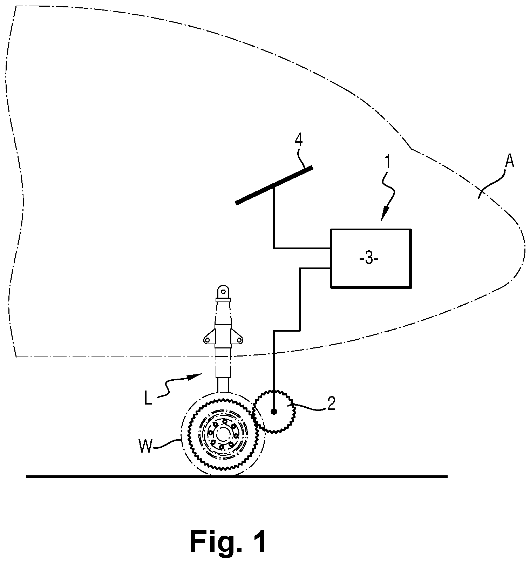

L'invention est décrite, en référence aux figures, en application à un aéronef, ici un avion A, pourvu d'un train d'atterrissage dont un atterrisseur avant L pourvu de roues W est représenté sur la figure 1. L'atterrisseur avant L est connu en lui-même et ne sera pas décrit plus en détail ici.

L'avion A est pourvu d'un dispositif de motorisation, généralement désigné en 1, pour déplacer au sol l'avion A.

Le dispositif de motorisation 1 comprend un moteur électrique 2 ayant un arbre de sortie pourvu de moyen de sa liaison en rotation aux roues W de l'atterrisseur avant L pour entraîner lesdites roues W en rotation.

Le dispositif de motorisation comprend également une unité électronique de commande 3 reliée, d'une part, au moteur électrique 2 pour le commander et, d'autre part, à une interface de pilotage 4 qui est disposée dans le cockpit de l'avion A. A partir de l'interface de pilotage 4, le pilote de l'avion A peut émettre des signaux de commande que l'unité électronique de commande 3 est agencée pour transformer en signaux de pilotage du moteur 2.

L'unité électronique de commande 3 comprend un processeur (ou un autre type de calculateur comme un circuit de type ASIC, un FPGA, un microcontrôleur...) et une mémoire contenant au moins un programme contenant des instructions agencées pour la mise en œuvre d'un programme de commande du dispositif de motorisation 1.

Le programme de commande exécuté par l'unité électronique de commande 3 comprend plusieurs lois de commande mettant en œuvre des boucles et stratégies de contrôle pour piloter le moteur 2 en fonction des signaux électriques émis par l'interface de commande 4, à savoir :
- une première loi de commande ayant une dynamique déterminée pour favoriser une vitesse de déplacement de l'avion A,
- une deuxième loi de commande ayant une dynamique favorisant une manœuvrabilité de l'avion A dans un sens d'avancement,
- une troisième loi de commande ayant une dynamique déterminée pour favoriser une manœuvrabilité de l'avion A dans un sens de recul.

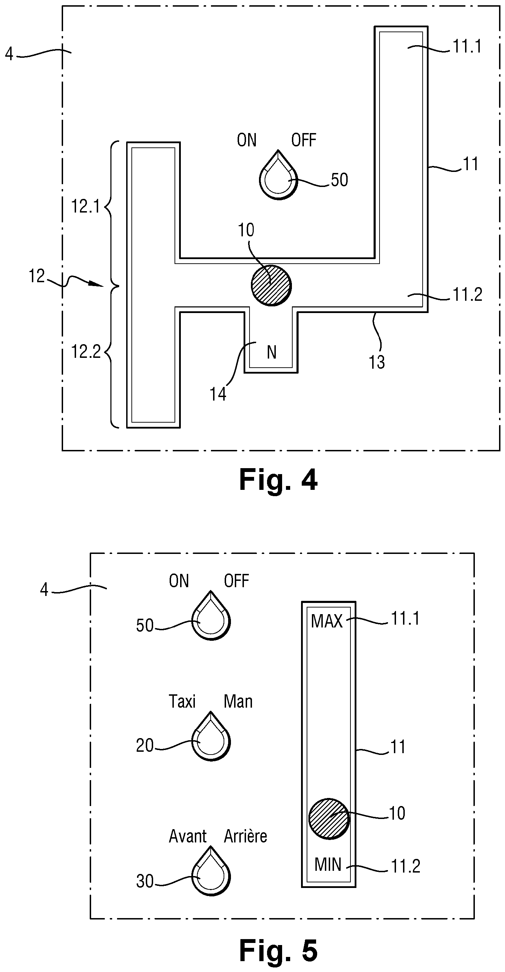

En référence plus particulièrement à la figure 4, l'interface de pilotage 4 comprend un commutateur 50 d'activation de la motorisation qui est mobile entre une position « ON » et une position « OFF », et un élément de commande 10, tel qu'une manette, agencé pour être déplaçable par le pilote de l'avion A le long d'une première échelle 11 et d'une deuxième échelle 12 parallèles l'une à l'autre et reliées l'une à l'autre par un tronçon de liaison 13 comprenant un point neutre 14.

La première échelle 11 comprend deux extrémités 11.1, 11.2 correspondant respectivement à une vitesse maximale et à une vitesse minimale, ici nulle, pour commander le moteur électrique 2 entre ces deux vitesses, en fonction de la position de l'élément de commande 10 le long de la première échelle 11, en mettant en œuvre la première loi de commande.

La deuxième échelle 12 comprend un premier tronçon 12.1 ayant une première extrémité correspondant à une vitesse maximale en marche avant et une deuxième extrémité qui correspond à une vitesse nulle et qui est reliée à une première extrémité d'un deuxième tronçon 12.2 ayant une deuxième extrémité correspondant à une vitesse maximale en marche arrière. L'élément de commande 10 est déplaçable le long de la deuxième échelle 12 pour commander le moteur entre l'une des deux vitesses maximales et la vitesse nulle en fonction de la position de l'élément de commande 10 :
- en mettant en œuvre la deuxième loi de commande lorsque l'élément de commande 10 est dans le tronçon 12.1 ;
- en mettant en œuvre la troisième loi de commande lorsque l'élément de commande 10 est dans le tronçon 12.2.

Pour une amplitude de déplacement donné de l'élément de commande 10, la première loi de commande détermine une accélération prédéterminée :
- supérieure à l'accélération déterminée par la deuxième loi de commande pour une même amplitude de déplacement de l'élément de commande 10 ;
- supérieure à l'accélération déterminée par la troisième loi de commande pour une même amplitude de déplacement de l'élément de commande 10.

En outre, la vitesse maximale atteignable avec la première loi de commande est supérieure à celle atteignable avec les deux autres lois de commande.

Pour une amplitude de déplacement donnée de l'élément de commande 10, la deuxième loi de commande détermine une accélération prédéterminée (par exemple une accélération de 4kn par seconde, on rappelle que 1 kn, ou knot, vaut 1852 m/h) supérieure à l'accélération déterminée par la troisième loi de commande (par exemple 0,5kn par seconde) pour une même amplitude de déplacement de l'élément de commande 10. En variante, pour une amplitude de déplacement donnée de l'élément de commande 10, la deuxième loi de commande détermine une accélération prédéterminée égale, ou inférieure à l'accélération déterminée par la troisième loi de commande pour une même amplitude de déplacement de l'élément de commande 10.

L'accélération prédéterminée par la première loi de commande est compatible (c'est-à-dire plus adaptée) avec un déplacement en ligne droite ou selon des trajectoires courbes à grands rayons (résultant d'un angle de braquage de la jambe de train avant compris entre 0° et 30° par exemple) à vitesse relativement élevée comme lors du taxiage (à une vitesse comprise entre 10 et 20 kn par exemple).

L'accélération prédéterminée par la deuxième loi de commande est plus adaptée à la réalisation de virages de faible rayon (résultant d'un angle de braquage de la jambe de train avant compris entre 31° et 74° par exemple) à relativement faible vitesse (inférieure à 10 kn par exemple) comme pour rentrer dans une place de parking ou en sortir.

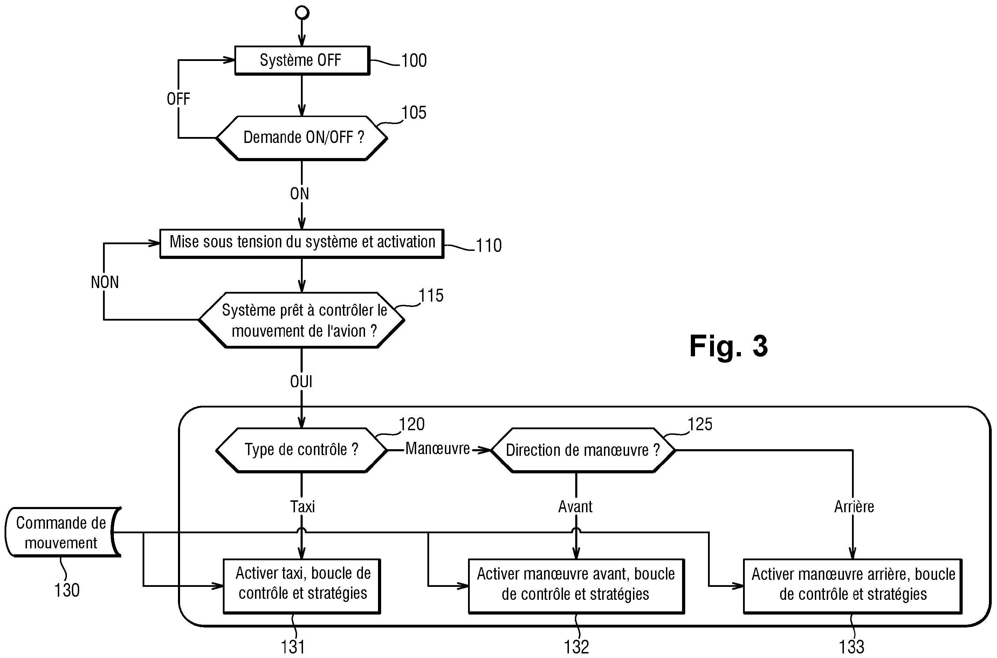

Selon la figure 3 également, le dispositif de motorisation étant à l'arrêt (100), le pilote qui désire utiliser le dispositif de motorisation actionne le commutateur 50 (105) provoquant la mise sous tension du dispositif de motorisation 1 (110) et de l'unité de commande 3 qui assure une vérification de l'état du dispositif de motorisation (115). Le pilote choisit alors en déplaçant l'élément de commande 10 le type de roulage qu'il souhaite effectuer (120) et le sens de roulage (125). L'unité de commande 3 va alors commander le moteur électrique 2 (130) en appliquant la loi de commande découlant du choix du pilote (131 pour la première loi de commande, 132 pour la deuxième, 133 pour la troisième).

Selon le deuxième mode de réalisation représenté sur la figure 5, l'unité électronique de commande 3 ne met en œuvre qu'une première loi de commande pour le taxiage et une deuxième loi de commande pour les manœuvres en marche avant et en marche arrière. L'interface de pilotage 4 comprend :
- un élément de commande 10 agencé pour être déplaçable par le pilote de l'avion 3 le long d'une échelle 11 comprenant deux extrémités 11.1, 11.2 correspondant respectivement à une vitesse maximale et à une vitesse minimale pour commander le moteur électrique 2 entre ces deux vitesses en fonction de la position de l'élément de commande 10 le long de l'échelle 11 ;
- un organe de sélection de la première loi de commande ou de la deuxième loi de commande, ici un commutateur 20 ;
- un organe de sélection d'un sens de rotation du moteur électrique 2 lors de la mise en œuvre de la deuxième loi de commande, ici un commutateur 30.

Le commutateur 20 pivote ici entre une position de taxiage « Taxi » pour commander à l'unité de commande 3 d'appliquer la première loi de commande et une position de manœuvre « Man » pour commander à l'unité de commande 3 d'appliquer la deuxième loi de commande.

Le commutateur 30 pivote ici entre une position « Avant » pour commander à l'unité de commande 3 d'entraîner le moteur 2 en marche avant et une position « Arrière » pour commander à l'unité de commande 3 d'entraîner le moteur 2 en marche arrière. On remarquera que l'unité de commande 3 est agencée pour tenir compte de la sélection du sens avant ou arrière uniquement lorsque le commutateur 20 est en position manœuvre, en position taxiage seul un déplacement en marche avant étant possible. On peut prévoir que le placement du commutateur 20 en position de taxiage provoque l'allumage d'une led sur le commutateur 30 pour indiquer que celui-ci est activé.

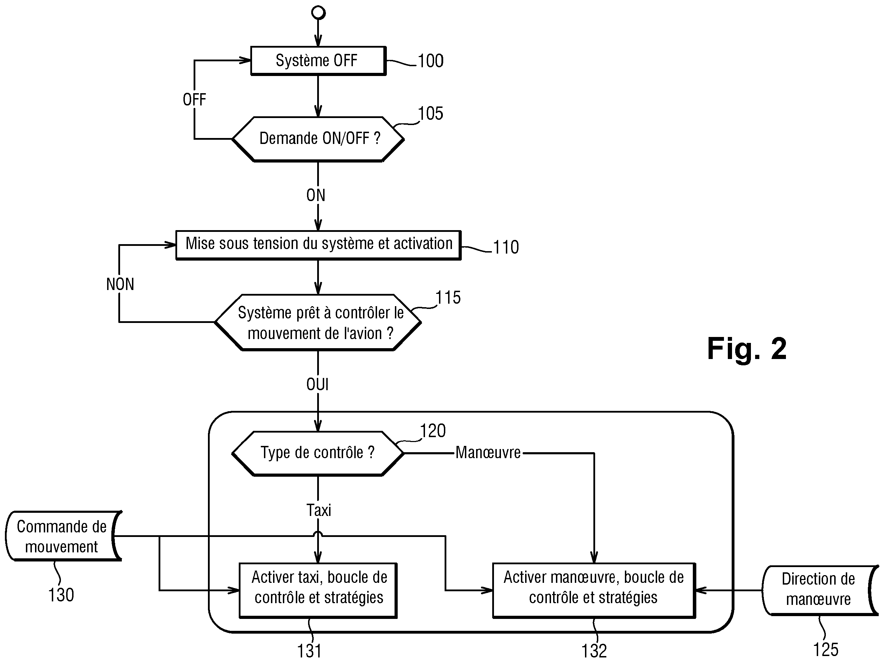

Le mode de fonctionnement correspondant est décrit à la figure 2.

Bien entendu, l'invention n'est pas limitée au mode de réalisation décrit mais englobe toute variante entrant dans le champ de l'invention telle que définie par les revendications.

En particulier, le dispositif peut avoir une structure différente de celle décrite.

Le dispositif de l'invention peut être utilisé pour la motorisation d'une ou plusieurs roues d'un aéronef. Le dispositif peut comprendre deux moteurs électriques chacun associé à un des trains d'atterrissage principaux et relié aux roues de ce train d'atterrissage principal.

Les commutateurs 20, 30 peuvent être remplacés par tout autre dispositif permettant une sélection et par exemple des interrupteurs comme des boutons poussoirs.

L'élément de commande 10 peut être remplacé par tout dispositif permettant une variation continue comme par exemple un potentiomètre. L'élément de commande 10 pourrait également être remplacé par un commutateur permettant une sélection de vitesse parmi des valeurs prédéfinies. On pourrait prévoir un commutateur de sélection de vitesse pour le taxiage et un commutateur de sélection de vitesse pour la manœuvre, l'actionnement de l'un ou l'autre des commutateurs sélectionnant automatiquement la loi de commande correspondante.

L'élément de commande 10 et les commutateurs 20, 30 peuvent également être remplacés par un ou plusieurs écrans tactiles.

Le mode de fonctionnement peut être différent de celui décrit. Par exemple, le dispositif de motorisation peut être agencé pour ne pas fonctionner en marche arrière. Le mode de fonctionnement correspond à celui de la figure 2 sans l'opération 125.

On peut également prévoir une vitesse unique en marche arrière.

Les angles de braquage ou les vitesses mentionnés peuvent être différents de ceux mentionnés à titre indicatif dans la description.

## Revendications

1. Dispositif de motorisation (1) pour déplacer au sol un aéronef (A) ayant un dispositif d'atterrissage (L) comportant des roues (W), le dispositif de motorisation comprenant au moins un moteur électrique (2) ayant un arbre de sortie pourvu de moyen de sa liaison en rotation à au moins une des roues (W) du dispositif d'atterrissage pour entraîner ladite roue en rotation, et une unité électronique de commande (3) reliée d'une part au moteur pour le commander et d'autre part à une interface de pilotage (4) comportant un élément de commande (10) que le pilote de l'aéronef peut déplacer pour émettre des signaux de commande que l'unité électronique de commande est agencée pour transformer en signaux de pilotage du moteur, l'unité de commande étant agencée pour mettre en œuvre une première loi de commande du moteur ayant une dynamique déterminée pour favoriser une vitesse de déplacement de l'aéronef et une deuxième loi de commande du moteur ayant une dynamique favorisant une manœuvrabilité de l'aéronef, **caractérisé en ce que** la première loi de commande détermine une accélération prédéterminée supérieure à l'accélération déterminée par la deuxième loi de commande pour une même amplitude de déplacement de l'élément de commande (10).

2. Dispositif selon la revendication 1, dans lequel l'unité de commande est agencée pour mettre en œuvre une troisième loi de commande ayant une dynamique déterminée pour favoriser une manoeuvrabilité de l'aéronef, la deuxième loi de commande étant agencée pour commander le moteur dans un sens d'avancement et la troisième loi de commande étant agencée pour commander le moteur dans un sens de recul.

3. Dispositif selon la revendication 1 ou 2, dans lequel l'élément de commande (10) est agencé pour être déplaçable par le pilote de l'aéronef le long d'une première échelle (11) et d'une deuxième échelle (12) parallèles l'une à l'autre et reliées l'une à l'autre par un tronçon de liaison (13) comprenant un point neutre, la première échelle comprenant deux extrémités (11.1, 11.2) correspondant respectivement à une vitesse maximale et à une vitesse minimale pour commander ledit au moins un moteur entre ces deux vitesses en fonction de la position de l'élément de commande en mettant en œuvre la première loi de commande et la deuxième échelle comprenant deux extrémités correspondant respectivement à une vitesse maximale et à une vitesse minimale pour commander ledit au moins un moteur entre ces deux vitesses en fonction de la position de l'élément de commande en mettant en œuvre la deuxième loi de commande.

4. Dispositif selon la revendication 3, dans lequel la deuxième échelle (12) comprend un premier tronçon (12.1) ayant une première extrémité correspondant à une vitesse maximale en marche avant et une deuxième extrémité qui correspond à une vitesse nulle et qui est reliée à une première extrémité d'un deuxième tronçon (12.2) ayant une deuxième extrémité correspondant à une vitesse maximale en marche arrière.

5. Dispositif selon la revendication 3, dans lequel l'interface de pilotage (4) comprend un organe de sélection (30) d'un sens de rotation dudit au moins un moteur (2) lors de la mise en œuvre de la deuxième loi de commande.

6. Dispositif selon la revendication 1 ou la revendication 2, dans lequel l' élément de commande (10) est agencé pour être déplaçable par le pilote de l'aéronef le long d'une échelle (11) comprenant deux extrémités correspondant respectivement à une vitesse maximale et à une vitesse minimale pour commander ledit au moins un moteur entre ces deux vitesses en fonction de la position de l'élément de commande, et un organe de sélection (20) de la première loi de commande ou de la deuxième loi de commande.

7. Dispositif selon la revendication 6, dans lequel l'interface de pilotage (4) comprend un organe de sélection (30) d'un sens de rotation dudit au moins un moteur lors de la mise en œuvre de la deuxième loi de commande.

## Patentansprüche

1. Antriebsvorrichtung (1) zum Bewegen eines am Boden befindlichen Luftfahrzeugs (A), das eine Landevorrichtung (L) mit Rädern (W) aufweist, wobei die Antriebsvorrichtung umfasst: zumindest einen Elektromotor (2) mit einer Ausgangswelle, die mit Drehverbindungsmitteln zu zumindest einem der Räder (W) der Landevorrichtung versehen ist, um das Rad in Drehbewegung zu versetzen; und eine elektronische Steuereinheit (3), welche einerseits mit dem Motor verbunden ist, um diesen zu steuern, und andererseits mit einer Ansteuerungsschnittstelle (4) verbunden ist, die ein Steuerelement (10) aufweist, welches der Pilot des Luftfahrzeugs verstellen kann, um Steuersignale auszugeben, die von der dafür ausgelegten elektronischen Steuereinheit in Motor-Ansteuerungssignale umgewandelt werden, wobei die Steuereinheit dafür ausgelegt ist, ein erstes Motorsteuerungsgesetz mit einer Dynamik auszuführen, die dafür bestimmt ist, eine Bewegungsgeschwindigkeit des Luftfahrzeugs zu begünstigen, und ein zweites Motorsteuerungsgesetz mit einer Dynamik auszuführen, die eine Manövrierfähigkeit des Luftfahrzeugs begünstigt, **dadurch gekennzeichnet, dass** das erste Steuerungsgesetz bei gleicher Verstellamplitude des Steuerelements (10) eine vorbestimmte Beschleunigung bestimmt, die größer ist als die durch das zweite Steuerungsgesetz bestimmte Beschleunigung.

2. Vorrichtung nach Anspruch 1, wobei die Steuereinheit dafür ausgelegt ist, ein drittes Steuerungsgesetz mit einer Dynamik auszuführen, die dafür bestimmt ist, eine Manövrierfähigkeit des Luftfahrzeugs zu begünstigen, wobei das zweite Steuerungsgesetz dafür ausgelegt ist, den Motor in einer Vorwärtsrichtung zu steuern, und das dritte Steuerungsgesetz dafür ausgelegt ist, den Motor in einer Rückwärtsrichtung zu steuern.

3. Vorrichtung nach Anspruch 1 oder 2, wobei das Steuerelement (10) derart ausgelegt ist, dass es von dem Piloten des Luftfahrtzeugs entlang einer ersten Skala (11) und einer zweiten Skala (12) verstellt werden kann, welche parallel zueinander verlaufen und durch einen Verbindungsabschnitt (13) miteinander verbunden sind, der einen Neutralpunkt umfasst, wobei die erste Skala zwei Enden (11.1, 11.2) umfasst, die jeweils einer maximalen Geschwindigkeit und einer minimalen Geschwindigkeit entsprechen, um unter Anwendung des ersten Steuerungsgesetzes den zumindest einen Motor je nach Position des Steuerelements zwischen diesen beiden Geschwindigkeiten zu steuern, und wobei die zweite Skala zwei Enden umfasst, die jeweils einer maximalen Geschwindigkeit und einer minimalen Geschwindigkeit entsprechen, um unter Anwendung des zweiten Steuerungsgesetzes den zumindest einen Motor je nach Position des Steuerelements zwischen diesen beiden Geschwindigkeiten zu steuern.

4. Vorrichtung nach Anspruch 3, wobei die zweite Skala (12) umfasst: einen ersten Abschnitt (12.1) mit einem ersten Ende, das einer maximalen Geschwindigkeit bei Vorwärtsfahrt entspricht, und mit einem zweiten Ende, das einer Nullgeschwindigkeit entspricht und das mit einem ersten Ende eines zweiten Abschnitts (12.2) verbunden ist, welcher ein zweites Ende aufweist, das einer maximalen Geschwindigkeit bei Rückwärtsfahrt entspricht.

5. Vorrichtung nach Anspruch 3, wobei die Ansteuerungsschnittstelle (4) ein Auswahlorgan (30) zum Auswählen einer Drehrichtung des zumindest einen Motors (2) bei der Anwendung des zweiten Steuerungsgesetzes umfasst.

6. Vorrichtung nach Anspruch 1 oder nach Anspruch 2, wobei das Steuerelement (10) derart ausgelegt ist, dass es von dem Piloten des Luftfahrtzeugs entlang einer Skala (11) verstellt werden kann, welche zwei Enden umfasst, die jeweils einer maximalen Geschwindigkeit und einer minimalen Geschwindigkeit entsprechen, um den zumindest einen Motor je nach Position des Steuerelements zwischen diesen beiden Geschwindigkeiten und in Abhängigkeit zu einem Auswahlorgan (20) zum Auswählen des ersten Steuerungsgesetzes oder des zweiten Steuerungsgesetzes zu steuern.

7. Vorrichtung nach Anspruch 6, wobei die Ansteuerungsschnittstelle (4) ein Auswahlorgan (30) zum Auswählen einer Drehrichtung des zumindest einen Motors bei der Anwendung des zweiten Steuerungsgesetzes umfasst.

## Claims

1. A motorizing device (1) for moving an aircraft (A) equipped with a landing device (L) having wheels (W) on the ground, the motorizing device comprising at least one electric motor (2) having an output shaft provided with means for its rotational connection to at least one of the wheels (W) of the landing device for driving said wheel in rotation, and an electronic control unit (3) connected on the one hand to the motor to control it and on the other hand to a control interface (4) comprising a control element that the aircraft pilot can move to transmit control signals which the electronic control unit is arranged to transform into motor control signals, the control unit being arranged to implement a first control law having determined dynamics to promote an aircraft movement speed and a second control law having dynamics to promote aircraft manoeuvrability, **characterized in that** the first control law determines a predetermined acceleration greater than an acceleration determined by the second control law for the same movement amplitude of the control element (10).

2. A device according to claim 1, wherein the control unit is arranged to implement a third control law having determined dynamics to promote manoeuvrability of the aircraft, the second control law being arranged to control the motor in a forward direction and the third control law being arranged to control the motor in a reverse direction.

3. A device according to claim 1 or 2, wherein the control element (10) is arranged to be movable by the pilot of the aircraft along a first scale (11) and a second scale (12) parallel to each other and connected to each other by a connecting section (13) including a neutral point, the first scale including two ends (11.1, 11.2) corresponding respectively to a maximum speed and a minimum speed to control the motor between these two speeds according to the position of the control element by implementing the first control law and the second scale comprising two ends corresponding respectively to a maximum speed and a minimum speed to control the motor between these two speeds according to the position of the control element by implementing the second control law.

4. A device according to claim 3, wherein the second scale (12) comprises a first section (12.1) having a first end corresponding to a maximum forward speed and a second end corresponding to a zero speed and which is connected to a first end of a second section (12.2) having a second end corresponding to a maximum reverse speed.

5. A device according to claim 3, wherein the control interface (4) comprises a selection element (30) for selecting a direction of rotation of the motor (2) during the implementation of the second control law.

6. A device according to claim 1 or claim 2, wherein the control interface (4) comprises a control element (10) arranged to be movable by the pilot of the aircraft along a scale (11) comprising two ends corresponding respectively to a maximum speed and a minimum speed to control the motor between these two speeds according to the position of the control element, and a selection element (20) of the first control law or the second control law.

7. A device according to claim 6, wherein the control interface (4) comprises a selection element (30) for selecting a direction of rotation of the motor during the implementation of the second control law.
